# EUROPEAN PATENT SPECIFICATION

(11) **EP 1 535 123 B1**
(45) Date of publication and mention of the grant of the patent: **03.10.2007**
(21) Application number: 03794488.1
(22) Date of filing: 20.08.2003
(51) Int. Cl.: G05D 16/20, G01F 23/14, B65D 90/44

(54) **GAS BLANKET MANAGEMENT SYSTEM AND METHOD THEREOF**
SCHUTZGASVERWALTUNGSSYSTEM UND VERFAHREN DAZU
SYSTEME ET PROCEDE DE GESTION DE COUCHE DE GAZ

(30) Priority: 05.09.2002 US 235470
(43) Date of publication of application: 01.06.2005
(73) Proprietor: FISHER CONTROLS INTERNATIONAL LLC, St. Louis, MO 63136 (US)
(72) Inventor: ADAMS, Paul, Robert, Marshalltown, IA 50158 (US); GRUMSTRUP, Bruce, Frederick, Marshalltown, IA 50158 (US)
(74) Representative: Bohnenberger, Johannes
(86) International application number: PCT/US2003/025917
(87) International publication number: WO 2004/023230

(56) References cited:
- GB-A- 2 026 859
- US-A- 4 489 569
- US-A- 5 173 551
- US-A- 5 616 302
- US-A- 5 837 192
- US-A1- 2002 108 670

## Description

### Field of the Disclosure

The present disclosure generally relates to a storage tank monitoring system and, more particularly, to a gas blanket monitoring system and method.

### Background of the Disclosure

Storage tanks, and particularly large industrial storage tanks, are often used to store fluids. These fluids typically produce environmentally unfriendly emissions such as, for example, volatile organic compounds, hydrocarbons or other fugitive chemicals. Due to their unfriendly emissions, these fluids are often required to be isolated from the atmosphere. Atmospheric isolation is typically achieved by placing an inert gas, such as nitrogen, on top of the enclosed tank, thereby creating a gas barrier between the stored media fluid and the atmosphere. Such a gas blanket or gas blanketing system may be used for several reasons and situations including, but not limited to, eliminating or minimizing the amount of emissions produced by the stored media and protecting or isolating the stored media in the tank from the atmosphere to minimize or eliminate the contamination of the stored media.

Generally, storage tanks are not designed to withstand excessive pressure. Thus, the blanketing gas on top of the tank is usually held at a low pressure. To ensure the blanket gas is at a low or desired pressure, the blanket gas, as the fluid media is added to or removed from the tank, must also be added or removed to compensate for the removal or addition of volume occupied by the fluid media. To obtain a suitable pressure in the tank, a gas blanketing regulator may be utilized in conjunction with a vapor recovery device or other device able to release the gas pressure on the interior of the tank.

In addition to pressure regulators, other devices have been utilized to obtain various values and data regarding the status of the stored media and blanket gas within a storage tank. For example, in a case of an emergency, such as when the tank is experiencing excessive pressure, an emergency vent valve may be used. In another example, if a tank is experiencing an excessive, negative pressure situation which may cause a tank to implode, a vacuum or relief vent may be used. Tanks have also been equipped with level monitoring devices for obtaining data relating to the amount of stored media. Other tank monitoring devices may include a tank fill system, a tank extraction or outflow system, and a tank heating system.

The different above-mentioned technologies and devices have been used independently of each other, thereby providing specific data or accomplishing a single purpose for which the device was specifically intended. These separate devices, however, are limited in their utility and are unable to independently manage a storage tank system. The benefits of regulation based on combined/holistic data gathering includes lower gas blanketing costs by providing efficient product blanketing, preventing product contamination, minimizing product evaporation, reducing blanketing gas losses, avoiding product spoilage or deterioration, and assuring compliance with clean air regulation. Therefore, there still remains a need for a gas blanket management system that combines gas blanketing controls with the monitoring of other tank parameters.

Further information pertaining to the prior art can be found in US patent 5,837,192 relating to a process and apparatus for inert blanketing of reactors. Specifically, it addresses the problem that, when reactors charged with nitrogen as inert-blanketing gas are opened, high losses of inert-blanketing gas occur which previously have only been able to be compensated for by increased feed of inert-blanketing gas. In this respect, it teaches that, to minimize the consumption of inert-blanketing gas during temporary opening of reactors, a further inert-blanketing gas is admixed to the nitrogen. The inert-blanketing gas mixture in the process has a density which is slightly greater than the density of the surrounding air.

US patent application publication 2002/0108670 discloses a monitoring and controlling system for use in conjunction with a storage tank, comprising a blanket gas flow control device adapted to control the flow of a blanket gas in a storage tank that is adapted for storing a fluid media as a stored media; a stored media sensor adapted to sense a stored media parameter associated with the stored media within the storage tank and responsively generate a stored media signal; and a controller unit adapted to receive the stored media signal and responsively generate a control device signal.

### Summary of the Disclosure

The present invention provides a storage tank monitoring system in accordance with independent claim 1 and a method of monitoring a storage tank in accordance with independent claim 21. Preferred embodiments of the invention are reflected in the dependent claims.

In accordance with one aspect of the disclosure among others, a storage tank monitoring system is disclosed. In one exemplary embodiment, the system includes a controller unit, a blanket gas flow sensor, and one of a storage tank sensor and a blanket gas sensor. The stored media sensor is adapted to sense a stored media parameter from which a corresponding stored media signal is generated. The blanket gas sensor is adapted to sense a storage tank blanket gas parameter from which a corresponding blanket gas signal is generated. The blanket gas flow sensor is adapted to sense the a flow of blanket gas from which a corresponding blanket gas flow signal is generated. The controller unit is adapted to receive the blanket gas flow signal and one of the stored media signal and the blanket gas signal and, responsively, generate a blanket gas leak indicator signal.

In accordance with another aspect of the disclosure among others, a method of monitoring a storage tank is disclosed. In one exemplary embodiment, the method includes sensing a flow of blanket gas into a storage tank and generating a responsive blanket gas flow signal thereto. The method in one exemplary embodiment includes sensing at least one of a storage tank media parameter and a storage tank blanket gas parameter and generating one of a responsive stored media signal and blanket gas signal thereto. The method in one exemplary embodiment includes receiving the blanket gas flow signal and at least one of the stored media signal and the blanket gas signal as inputs and responsively generating a blanket gas leak indicator signal.

### Brief Description of the Drawings

FIG. 1 is a schematic diagram of a gas blanketing management system as constructed in accordance with the teachings of the disclosure;
FIG. 2 is a block diagram of the electronic components of a controller unit in the gas blanketing management system;
FIG. 3 is a block diagram of a gas blanketing management system network;
FIG. 4 is a schematic diagram of a gas blanketing management system network;
FIG. 5 is a schematic diagram of a package valve; and
FIG. 6 is a flowchart of an exemplary routine that may be performed during operation of the gas blanketing management system.

While the method and device described herein are susceptible to various modifications and alternative constructions, certain illustrative embodiments thereof have been shown in the drawings and will be described below in detail. It should be understood, however, that there is no intention to limit the invention to the specific forms disclosed, but on the contrary, the intention is to cover all modifications, alternative constructions, and equivalents falling within the spirit and scope of the invention as defined by the appended claims.

### Detailed Description

A gas blanketing management system 20 as described herein, may be used in a storage tank storing fluid media that produces environmentally unfriendly emissions such as, volatile organic compounds, hydrocarbons, or other fugitive chemicals. Due to its unfriendly emissions, the fluid media may be required to be isolated from the atmosphere. In one exemplary embodiment, such atmospheric isolation may be achieved by placing an inert gas or blanket gas such as nitrogen on top of the enclosed tank, thereby creating a gas barrier between the stored media fluid and the atmosphere.

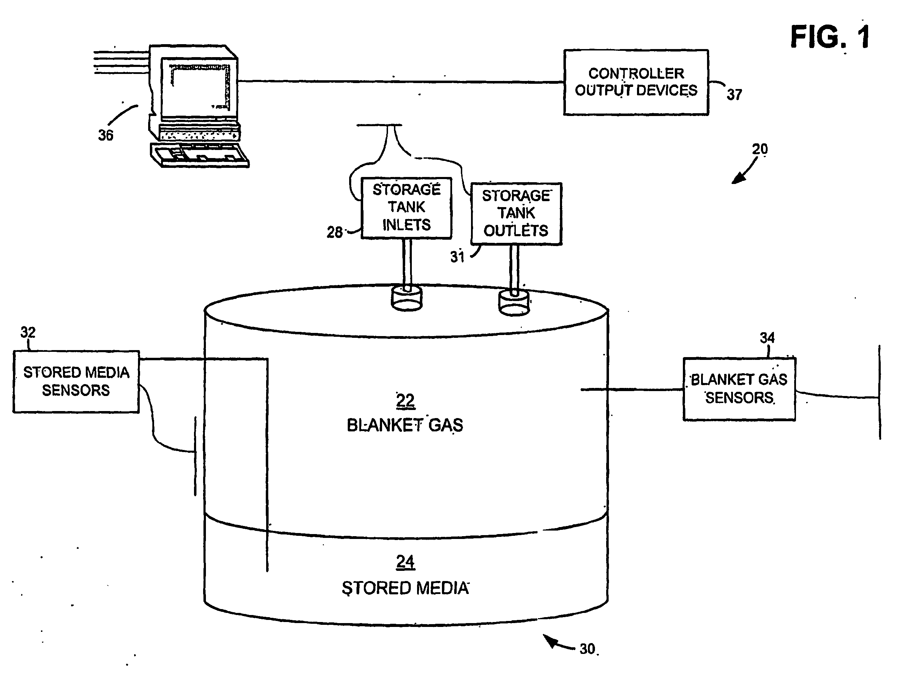

Referring now to the drawings, and with specific reference to Figure 1, the gas blanketing management system constructed in accordance with the teachings of the disclosure is generally depicted by reference numeral 20. As shown therein, the gas blanketing management system 20 in one exemplary embodiment includes a blanket gas 22, a stored media 24, a storage tank 30, at least one tank inlet 28, at least one tank outlet 31, at least one stored media sensor 32, at least one blanket gas sensor 34, a controller unit 36, and at least one control output device 37.

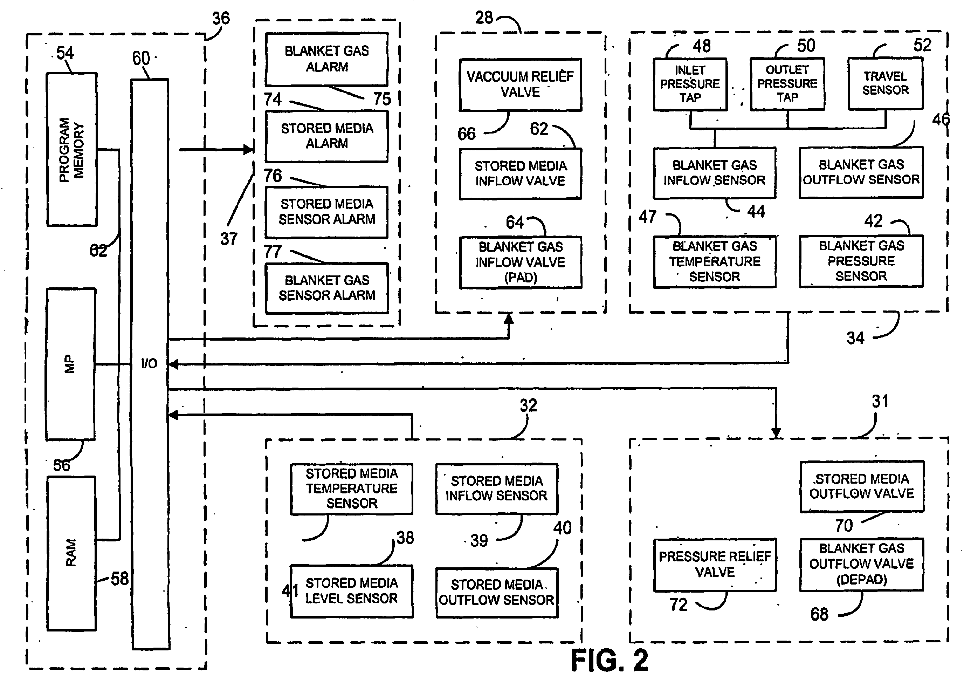

In one exemplary embodiment, the storage tank 30, may be a storage tank having various shapes and sizes that may be adapted to store and contain a variety of fluid media defined herein as fluid or gaseous materials. The stored media sensor 32 may be a sensor adapted to gauge one of several parameters of the stored media within the storage tank 30. As shown in Figure 2, in one exemplary embodiment, the stored media sensor 32 may be a stored media level sensor 38, a stored media inflow sensor 39, a stored media outflow sensor 40, a stored media temperature sensor 41, or any other desired parameter of the stored media in the tank 30.

Those of ordinary skill in the art will readily recognize that the type of stored media sensor 32 and the manner in which the stored media sensor 32 gauges the different parameters may vary greatly. In one exemplary embodiment, the stored media sensor 32, for example, may be a float valve. The float valve may include a float (not shown) which floats on top of the stored media thereby indicating tank level and, ultimately, the amount of stored media present in the storage tank 30. In one alternative embodiment, the stored media sensor 32 may, however, be a pressure sensor located near the bottom of the storage tank 30, also for attaining the amount of stored media present in the storage tank 30.

Similarly, the blanket gas sensor 34 may be a sensor adapted to gauge one of several parameters of the blanket gas within the storage tank 30. As also shown in Figure 2, in one exemplary embodiment, the blanket gas sensor 34 may be a blanket gas pressure sensor 42, a blanket gas inflow sensor 44, a blanket gas outflow sensor 46, a blanket gas temperature sensor 47, or any other parameter desired of the blanket gas. Once again, those of ordinary skill in the art will readily recognize that the type of blanket gas sensor 34 and the manner in which the blanket gas sensor 34 gauges the different parameters may vary greatly. The blanket gas sensor 34 may be a pressure sensor located near the top of the storage tank 30, thereby obtaining the pressure of the blanket gas 22 in the storage tank 30. In another exemplary embodiment, the blanket gas sensor 34 may, however, be one or more flow sensors, wherein a single flow sensor may measure the amount of blanket gas 22 coming into or out of the storage tank 30, or wherein a pair of flow sensors may measure the amount of blanket gas 22 coming into and out of the storage tank 30.

The sensing of flow through the stored media inflow and outflow sensors 39, 40 and the blanket gas inflow and outflow sensors 44, 46 may also be accomplished in a variety of ways. As also shown in Figure 2, flow may be determined by measuring the inlet pressure of the blanket gas 22 with a pressure sensor 44 such as a inlet pressure tap 48, or the outlet pressure of the blanket gas with a pressure sensor such as a outlet pressure tap 50, and measuring an orifice of a blanket gas regulator 64. The size of the orifice may be obtained by measuring the travel distance of a valve plug or the like, via a travel sensor 52, and providing information for mathematically determining the blanket gas flow rate.

The amount and type of stored media sensors 32 and blanket gas sensors 34, or sensors in general are not, however, limited to two or to the type of sensors identified above. As such, in one exemplary embodiment, the blanket gas management system 20 may have one or more additional sensors able to measure various parameters of the fluid media 24 and/or the blanket gas 22. For example, additional sensors may include, but are not limited to, temperature and/or heat tracing sensors. The storage tank 30 may, as indicated above, have one or more stored media temperature sensors 41 adapted to sense the temperature of the stored media 24. In one exemplary embodiment, the storage tank 30 may include one or more gas blanket temperature sensors 47 adapted to sense the temperature of the blanket gas.

The controller unit 36, which is adapted to receive the signals generated by the various sensors and transmit device signals in various forms. The controller unit 36 may, for example, include a transceiver able to receive and/or transmit signals via a wireless or wire technology. More specifically, the signals generated by the sensors may be transmitted to the controller unit 36 via a hardwire such as RS485 or telephone technology, or via wireless technology, such as RF radio or Cellular Digital Packet Data (CDPD), or the like. Similarly, the method of transmitting a signal from the controller unit 36, may be accomplished via any of the above-mentioned or other ways readily recognized by those of ordinary skill in the art.

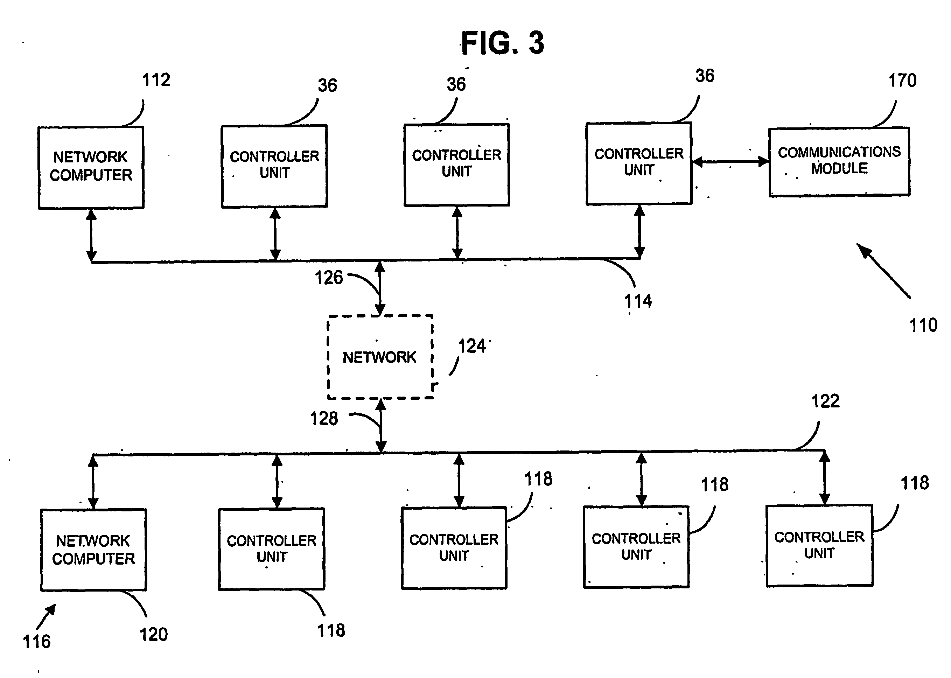

More specifically, as shown in the block diagrams of Figures 2 and 3, a number of components may be incorporated into the controller unit 36. Referring to Figure 2, the controller unit 36 in one exemplary embodiment may include a program memory 54, a microcontroller or microprocessor (MP) 56, a random-access memory (RAM) 58 and an input/output (I/O) circuit 60, all of which may be interconnected via an address/data bus 62. It should be appreciated that although only one microprocessor 56 is shown, the controller unit 36 may include additional microprocessors. Similarly, the memory of the controller unit 36 may include multiple RAMs 58 and multiple program memories 54. Although the I/O circuit 60 is shown as a single block, it should be appreciated that the I/O circuit 60 may include a number of different types of I/O circuits. The RAM(s) 58 and program memories 54 may be implemented, for example, as semiconductor memories, magnetically readable memories, and/or optically readable memories or other memories recognized by those of ordinary skill in the art.

Figure 2 illustrates that sensors, including stored media sensors 32 and blanket gas sensors 34, may be operatively coupled to the I/O circuit 60. Each of the above components may be so coupled by a unidirectional or bidirectional, single-line or multiple-line data link, which may depend on the design of the component that is used.

Components may be connected to the I/O circuit 60 via a direct line or conductor. Different connection schemes could be used. For example, one or more of the components shown in Figure 2 may be connected to the I/O circuit 60 via a common bus or other data link that is shared by a number of components. Furthermore, those of ordinary skill in the art will recognize that some of the components may be directly connected to the microprocessor 56 without passing through the I/O circuit 60.

As shown in Figures 1, 2, and 4 the output of the controller unit 36 may be connected to one or more storage tank input devices 28, one or more storage tank output devices 31, and one or more controller output devices 37 adapted to receive and/or respond to a device signal generated by the controller unit 36. The means by which the device signal is transmitted can, once again, vary greatly and may be similar or equal to the means by which the input signal was received.

More specifically, the storage tank input devices 28 may include, as indicated in Figure 2, a stored media inflow valve or regulator 62 adapted to control flow of the stored media 22 into the tank 30, a blanket gas valve or regulator (PAD valve) 64 to control flow of the blanket gas 22 into the tank 30, as well as a vacuum relief valve 66 to allow for atmospheric pressure to be communicated into the tank 30 to avoid implosion or coupling of the tank 30.

Similarly the storage tank output devices 31 may include a blanket gas outflow valve or regulator (DEPAD valve) 68 to control flow of the blanket gas 22 out of the tank 30, a stored media outflow valve or regulator 70 to control flow of the stored media 24 out of the tank 30, as well as a pressure relief valve 72 to vent excess pressure to the atmosphere to avoid damage or implosion of the tank 30.

The gas pressure at which the gas blanketing management system 20 operates, may be any pressure suitable for its intended purpose. In one exemplary embodiment, the blanket gas line pressure coming into the gas blanketing management system 20 may be in the range of 20-200 PSI, and more specifically may be approximately 100 PSI. Similarly, the blanket gas pressure within the storage tank 30, may be any pressure suitable for its intended purpose. In one exemplary embodiment, the blanket gas pressure within the storage tank 30 may be in the range of ¼ inch H₂O (60°F) -20 PSI, and more specifically may be approximately 1-2 PSI. In this disclosure and appended claims, the term "PAD" refers to the blanketing of areas in the storage tank 30 with blanketing gas to maintain pressure, whereas the term "DEPAD" refers to the venting of areas in the storage tank 30, containing blanketing gas, to limit the gas blanketing pressure.

The controller output devices 37 may include an alarm configured to activate upon receiving, or failing to receive, an indicator signal from the controller unit 36. As such, in one exemplary embodiment, the tank controller output devices 37 may include, as shown in Figure 2, a stored media alarm 74, a blanket gas alarm 75, a stored media sensor alarm 76, or a blanket gas sensor alarm 77. Such alarms may be audible, visual, or tactile in nature, or may be automated so as to cease operation or take other corrective action as needed.

The controller unit 36, and the gas blanketing management system 20 in general, may also communicate with external devices. For example, the gas blanketing management system 20 and the controller unit 36 may be adapted to communicate with a third party, such as a company or entity responsible for the stored media 24, a supplier of the blanket gas 22, and/or various authorities such as a fire department, police and/or other entities. With the third party communication ability, the controller unit 36 may communicate the information obtained from the above-referenced sensors and/or the control devices directly or indirectly to the responsible or necessary people. The people responsible for the stored media 24, for example, may be notified immediately if an alarm is activated, or may be kept up-to-date on the level of the stored media 24. Similarly, the blanket gas supplier may be notified at the time the blanket gas supply reaches a level at which the supply of gas should be replenished. It may also be desired to communicatively link one or more of the sensors, control devices and/or alarms to one or more entities, such as the fire department, thereby in this example, providing a quick response ability to the department in case of an emergency with which the storage tank 30 is involved.

The gas blanketing management system 20 may, therefore, as seen in Figure 3, include a first network 110. The first network 110 may include at least one controller unit 36 operatively coupled to a network computer 112 via a network data link or bus 114. The gas blanketing management system 20 may also include a second network 116. The second network 116 includes at least one controller unit 118 operatively coupled to a network computer 120 via a network data link or bus 122. The first and second networks 110, 116 may be operatively coupled to each other via a network 124, which may comprise, for example, the Internet, a wide area network (WAN), or local area network (LAN), via a first and second network links 126 and 128.

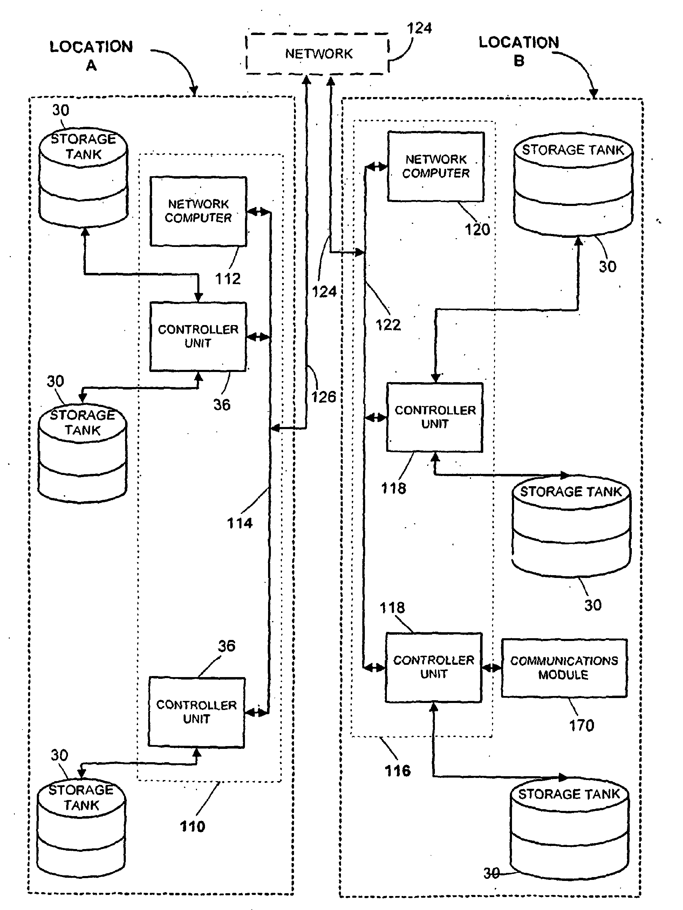

As indicated in Figure 4, the controller units 36 of the first network 110 may be provided in a first tank farm at location A, and the second network 116 of controller units 118 may be provided in a second tank farm located in a separate geographic location from the first tank farm, such as at location B. For example, the two tank farms may be located in different areas of the same city, or they maybe located in different states, countries or other geographical locations. The network 124 may include a plurality of network computers or server computers (not shown), each of which may be operatively interconnected.

The network computer 112 may be a server computer. The network computer 112 may be used to collect and analyze data relating to operating the controller units 36. For example, the network computer 112 may continuously receive data from each of the controller units 36 indicative of sensor and/or control device status from each of the storage tanks 30. Similarly, the network computer 120 may be a server computer and may be used to perform the same or different functions as the network computer 112 in relation to the controller unit 118 described above.

The communications that occur between the above mentioned network 110 or networks 110, 116, the controller unit 36, the stored media sensors 32 or the blanket gas sensors 34 need not be limited to sensor signals received from the stored media sensors 32 or to device signals transmitted to the stored media input/output devices 62, 70 (stored media signals), or to sensor signals received from the blanket gas sensors 34 or to device signals transmitted to the blanket gas input/output devices 64, 68 (blanket gas signals). For example, the communications may include information that is specific to the storage tank 30, the blanket gas 22, and/or the stored media 24, that may be communicated separately from the stored media signals or the blanket gas signals, or may be communicated along with the stored media signals or blanket gas signals by encoding or uniquely tagging the respective signals with the storage tank, the blanket gas, and/or the stored media information.

For example, the stored media level sensor 38 may communicate a sensor signal to the controller unit 36 and/or a network 110, indicating an amount of stored media 24. Additionally, that sensor signal in one exemplary embodiment may include a tag or may be encoded with information relating to the storage tank 30 from which the stored media level sensor 38 is sensing. In particular, this information may include, but is not limited to, a unique storage tank specific tag for identifying the storage tank 30, or a unique stored media specific tag for identifying the stored media 24.

Similarly, as a further illustration, a blanket gas signal may be communicated to the controller unit 36 and/or a network 110 indicating that the blanket gas 22 is leaking. Additionally, that signal in one exemplary embodiment includes a tag or be encoded with information relating to the storage tank 30 from which the blanket gas signal originated. This information may include, but is not limited to, a unique storage tank specific tag for identifying the storage tank 30 or a unique blanket gas specific tag for identifying the blanket gas 22.

With reference to the operation of the gas blanketing regulation or, commonly, the "PAD" valve 64 of Figure 2 is a device that is able to maintain a constant pressure of the blanket gas 22 within the storage tank 30 by adding blanket gas 22 as needed. More specifically, the PAD valve 64 maintains the protective gaseous environment above any fluid stored in a tank or vessel by using a blanket of gas 22. The low-pressure gas blanket from the PAD valve 64 fills the void space above the fluid stored in the storage tank 30. The gas blanket 22 helps prevent outside air, moisture, and other contaminants from entering the storage tank 30. In addition, the gas blanket of the system provides a head pressure above the fluid within the storage tank 30 to reduce vapor loss which helps protect the storage tank 30 from corrosion. When the blanket gas pressure inside the storage tank 30 decreases, the PAD valve 64 will open, which will allow the blanket gas 22 into the storage tank 30. Similarly, the PAD valve 64 maintains a constant tank pressure while removing fluid from the storage tank 30, thereby preventing the storage tank 30 from collapsing.

The DEPAD valve 68, on the other hand, is able to maintain a constant pressure of the blanket gas 22 within the storage tank 30 by removing vapor or blanket gas 22 from the storage tank 30. Once removed from the storage tank 30, the blanket gas 22 may be released into the atmosphere. The blanket gas 22 may also be recycled and may be processed or filtered to again be used as blanket gas 22.

In at least one exemplary embodiment, the PAD valve 64 and the DEPAD valve 68 may also be combined to create a PAD/DEPAD valve. The PAD/DEPAD valve, as the name suggests, performs the combined function of the two separate valves.

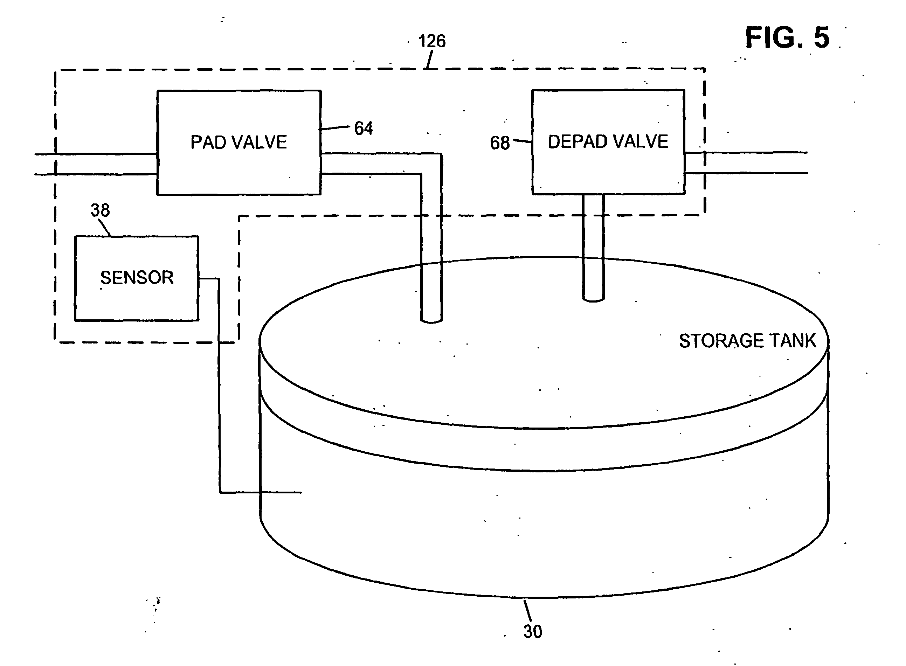

The PAD valve 64, the DEPAD valve 68, and the PAD/DEPAD valve may also be combined or incorporated with parameter sensing devices 32, 34 as shown in Figure 5, to create a package valve 126. With the aid of a controller unit 36, the package valve 126 is able to sense and regulate the different parameters of the stored media 24 and the blanket gas 22. In one exemplary embodiment, the package valve 126 may be a PAD valve 64 and a DEPAD valve 68 combined and incorporated with a stored media level sensor 38, such as a float device. The package valve 126 may be able to the sense the flow of the blanket gas. Moreover, as mentioned above, the package valve 126 and the stored media level sensor 38 may be able to sense and regulate the flow of the blanket gas 22 according to the level of the stored media 24.

The pressure relief valve or vent 72 and the vacuum relief valve or vent 66 are both utilized in situations that require pressure corrections within the storage tank 30. In most instances, the pressure relief vent 72 and the vacuum relief valve 66 are used to prevent the explosion or implosion of the storage tank 30, respectively. For example, if the storage tank 30 is being filled with stored media 24 and the blanket gas 22, for one reason or another, is not removed to compensate for the addition of the stored media volume, the pressure within the storage tank 30 will increase, thereby threatening the integrity of the storage tank 30. If not reduced, the pressure may increase to a critical point, and cause the storage tank 30 to explode or leak. To prevent the pressure from increasing to that critical point, the pressure relief vent 72 will allow blanket gas 22 to escape as the blanket gas pressure increases.

In another example, if stored media 24 is being removed from the storage tank 30 and the blanket gas 22 for one reason or another is not added to compensate for the removal of stored media volume, the negative pressure within the storage tank 30 will increase, thereby threatening the integrity of the storage tank 30. If not corrected, the negative pressure may increase to a critical point and cause the storage tank 30 to implode or cause a leak. To prevent the negative pressure from increasing to that critical point, the vacuum relief valve 66 will intake the necessary blanket gas 22 or air to reduce the negative pressure.

In operation, the gas blanket management system 20 may be configured to accomplish a number of tasks, including the ability of the gas blanket management system 20 to obtain values for the different parameters of the stored media 24, the blanket gas 22, the storage tank 30, and the ability to activate tank controlling devices and alarms. The gas blanket management system 20, for example, may obtain the temperature of the stored media 24 or of the blanket gas 22, the pressure of the stored media 24 or of the blanket gas 22, and/or the flow rate of the stored media 24 or of the blanket gas 22. Along with the ability to obtain values for the different parameters of the different media, the gas blanket management system 20 in at least one exemplary embodiment may combine two or more parameters of the one or more media to accomplish, as mentioned above, various other functions.

With the combination of two or more parameters of the one or more media, the gas blanket management system 20 may be able to control or monitor the integrity of the storage tank 30, or be able to control or monitor a tank fill system, a tank extraction or outflow system, a tank level monitoring system, and/or a tank heating system.

In one example, the gas blanket management system 20 may utilize the controller unit 36, the gas blanket sensor 34, and the storage tank sensor 32 in combination with the PAD valve 64, the DEPAD valve 68, a stored media inflow valve 62, and a stored media outflow valve 70 to monitor the integrity of the storage tank 30. More specifically, when the storage tank system is in a steady state during which no stored media 24 or blanket gas 22 is added or extracted from the storage tank 30, the amount of stored media 24 and blanket gas 22, and hence their respective associated pressures, should remain constant.

It should be noted, that even though the storage tank 30 is in a theoretical steady state, with no addition or subtraction of either the blanket gas 22 or the stored media 24, in most instances there will be a diminishing pressure of the blanket gas 22 within the storage tank 30 due to a dissipation of the blanket gas 22. With the diminishing pressure and the dissipation of the blanket gas 22, during the steady state, there will be a flow of blanket gas 22 into the storage tank 30 to replenish the dissipating gas and to restore the blanket gas pressure. Therefore, it is assumed, and is well known in the art, that even though the storage tank 30 may be at a steady state with no substantial addition of blanket gas 22 into the storage tank 30, there may be a small continuous inflow of blanket gas 22 into the storage tank 30 to replenish the dissipating gas and to restore the blanket gas pressure.

It should be further noted, that even though there may be a small continuous inflow of blanket gas 22 into the storage tank 30, the blanket gas inflow sensor 44 may be calibrated to read as though no blanket gas 22 is flowing. The blanket gas inflow sensor 44 may be calibrated as such for several reasons including ensuring a positive pressure inside the storage tank 30 and preventing a false reading of a gas inflow sensor 44 and/or gas inflow valve or regulator 64.

If there is a leak in the storage tank 30 or there is a malfunction with either the stored media inflow valve 62 or the gas blanket inflow device 64, the gas blanketing management system 20 may be utilized to sense a storage tank leak or control device malfunction and may be able to activate an alarm accordingly. A storage tank leak may be caused by a puncture or a faulty storage tank control device, allowing for the escape of the blanket gas or the stored media from the storage tank 30, or by a faulty PAD valve 64, PAD/DEPAD valve or stored media inflow valve 62, thereby allowing for the accidental addition of the blanket gas 22 or the stored media 24 into the storage tank 30.

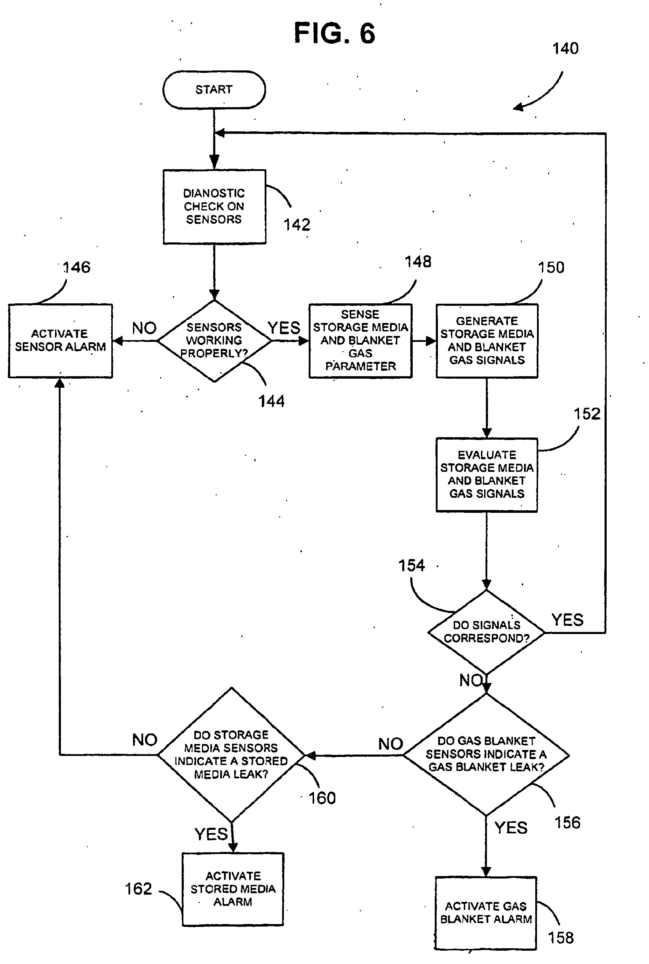

Such operation is depicted graphically in an exemplary routine 140 provided in Figure 6. The routine 140 may begin at a block 142 where the controller unit 36 initiates a diagnostic check of the available sensors, such as one or more stored media sensors 32 and/or one or more gas blanket sensors 34. Those of ordinary skill in the art will readily recognize that the means of performing the diagnostic check may be accomplished in various ways including single or bidirectional communication between the sensors 32, 34 and the controller unit 36 or any other suitable means accomplishing the diagnosis. If at a decision diamond 144, the diagnostic check 142 determines that one or more of the sensors 32, 34 is not functioning properly, the controller unit 36 may activate, at a block 146, either the stored media sensor alarm 76 or the gas blanket sensor alarm 77, depending on which of the sensor fails to function properly. If at the decision diamond 144, the diagnostic check 142 determines that the sensors 32, 34 are functioning properly, the stored media sensors 32 and the gas blanket sensors 34, at a block 148, will each sense a parameter of their respective media. The parameters being sensed by the sensors 32, 34 may include, but are not limited to, the inflow, the outflow, the temperature, the volume, and the pressure of the blanket gas, as well as the inflow, the outflow, the temperature, the volume, and the pressure of the stored media. However, for clarity, the routine 140 will be hereinafter described using a gas blanket inflow sensor 44 and a stored media level sensor 38.

After the gas blanket inflow sensor 44 at the block 148 senses the gas blanket inflow status, the gas blanket inflow sensor 44, at a block 150, may send a signal representative of the gas blanket inflow status to the controller unit 36. Similarly, after the stored media level sensor 38 at the block 148 senses the stored media level status, the stored media level sensor 38 sends a signal representative of the stored media level status to the controller unit 36. For example, the storage tank 30 may have a capacity of 3,140,000 ft³ wherein the stored media level sensor 38 may indicate that the storage tank 30 is filled to half capacity or 1,570,000 ft³, and that the height and hence the volume of the stored media is not changing.

Similarly, while the storage tank system is at a steady state, a gas blanket inflow rate of zero may be detected by the gas blanket inflow sensor 44. The stored media level sensor 38 and the gas blanket inflow sensor 44 may then send a signal representative of the respective level and flow rate to the controller unit 36. It should be noted that the means of communication between the controller unit 36, the sensors 38, 44, and the storage tank input and output devices 28, 31, may vary greatly, and may consist of several technologies. More specifically, as mentioned earlier, the controller unit 36 may include a transceiver able to receive and/or transmit signals via a wireless or wire technology. The signals generated by the sensors may be transmitted to the controller unit 36 via a hardwire such as RS485 or telephone technology, or via wireless technology, such as RF radio or Cellular Digital Packet Data (CDPD), or the like. Similarly, the method of transmitting a signal from the controller unit 36, may be accomplished via any of the above-mentioned or other ways readily recognized by those of ordinary skill in the art.

At a block 152 of Figure 6, the controller unit 36 may evaluate the signals received from the stored media level sensor 38 and the gas blanket inflow sensor 44. The signals may be compared to verify that the status of the stored media 24 and the status of the blanket gas 22 correspond to each other. For example, as above, if the signal from the stored media level sensor 38 indicates no change in the media level, the blanket gas inflow rate should correspondingly be zero. Therefore, the signals of the two or more sensors correspond to each other when the signals indicate the same status or change in the storage tank 30. If at a decision diamond 154, the signals indicate a corresponding status, control may be passed to the block 142, where the entire process is then repeated.

If at the decision diamond 154, the signals do not indicate a corresponding status, control may be passed to a decision diamond 156, where the signals are further evaluated to determine why the signals do not correspond. If at the decision diamond 156 the blanket gas inflow sensor 44 indicates that there is a blanket gas inflow into the storage tank 30 and the stored media level sensor 38 indicates that there is no change in stored media level, control may then pass to a block 158. At the block 158, the controller unit 36 may activate the blanket gas alarm 75. For example, there may be a puncture or an open vent or valve allowing the blanket gas 22 to escape if the signal from the stored media level sensor 38 indicates no change in the stored media level and the blanket gas inflow sensor 44 indicates a 100 ft³/min flow rate. If at the decision diamond 156, the gas blanket inflow sensor 44 signal indicates that there is no blanket gas inflow, control may be passed to a decision diamond 160.

If at decision diamond 160, the stored media level sensor 38 indicates that there is a change of the stored media level in the storage tank 30 and the blanket gas inflow sensor 44 indicates that there is no gas blanket flow rate, then control passes to a block 162 where the controller unit 36 may activate the stored media alarm 74. For example, if the signal from the stored media level sensor 38 indicates a 3 ft drop in the level of the stored media and the blanket gas inflow sensor 44 indicates a zero flow rate, then there may be a puncture or an open valve allowing the stored media 24 to escape. If, however, at the decision diamond 160, the stored media level sensor 38 also indicates that there is no change in the level of the stored media 24 in the storage tank 30, then the controller unit 36 may sense a failure in one of the sensors 38, 44 and activate one of the sensor alarms 76, 77 at the block 146.

The routine 140 of Figure 6 is only one of many examples and applications for which the gas blanketing management system 20 may be used. The number and types of sensors and control devices and combinations thereof, may be used to fulfill a number of regulatory, control, and information gathering functions. Furthermore, the structure and communications set-up for communicating with and controlling the controller unit, the sensors, and the control devices may be local or global. Illustratively, the controller unit 36 in Figure 3 may be able to communicate with a local communications module 170. The communications module 170 may be attached to the storage tank 30 or may be placed near of the storage tank 30. The communications module 170 may also be an integrated part of the controller unit 36, or be a wholly independent unit. A user may be able to utilize the communications module 170 to regulate the gas blanketing management system 20 directly, or may be able to utilize the communications module 170 to retrieve or download sensor and/or control device data.

The gas blanketing management system 20 may also be communicatively coupled to a third party system, computer or other communication device. The term "communicatively coupled" shall herein be construed to refer to any instance the gas blanketing management system 20 and/or the controller unit 36 is coupled or linked and is able to transfer and/or receive information, data and/or signals. For example, the gas blanketing management system 20 may be communicatively coupled to a monitor located at a gas manufacturing or gas distribution facility responsible for the maintenance of the storage tanks and/or the supply of the blanket gas. The transfer and/or receipt of information may be accomplished in various manners, such as directly or indirectly, hardwire or wireless, simultaneous communication or delayed, and/or unidirectional or bidirectional.

The foregoing detailed description has been.given for clearness of understanding only and no unnecessary limitations should be understood therefrom, as modifications will be apparent to those skilled in the art.

## Claims

1. A monitoring and controlling system (20) for use in conjunction with a storage tank, comprising:
a blanket gas flow control device (64) adapted to control the flow of a blanket gas (22) wherein the blanket gas flow control device includes a blanket gas flow sensor (44, 46) adapted to sense the flow of the blanket gas into or out of a storage tank (30) that is adapted for storing a fluid media as a stored media (24) and responsively generate a blanket gas flow signal;
at least one of a stored media sensor (32) and a blanket gas sensor (34) adapted to sense one of a stored media and a blanket gas parameter associated with the stored media or the blanket gas within the storage tank, respectively, and responsively generate one of a stored media and a blanket gas sensor signal; and
a controller unit (36) adapted to receive the blanket gas flow signal and one of the stored media signal and the blanket gas signal and responsively generate a control device signal.

2. The storage tank monitoring system of claim 1, wherein the control device signal includes at least one of a first and a second state wherein the first state is indicative of a blanket gas leak and the second state is indicative of no blanket gas leaks.

3. The storage tank monitoring system of any of claims 1 or 2, wherein the stored media sensor is adapted to sense a tank level of a stored media in the storage tank.

4. The storage tank monitoring system of any of claims 1 to 3, wherein the stored media sensor comprises a pressure sensor.

5. The storage tank monitoring system of any of claims 1 to 4, wherein the stored media sensor comprises a float valve.

6. The storage tank monitoring system of any of claims 1 to 5, wherein the stored media sensor comprises an inflow sensor (39) adapted to sense an inflow of media into the storage tank and an outflow sensor (40) adapted to sense an outflow of media from the storage tank.

7. The storage tank monitoring system of any of claims 1 to 6, wherein the blanket gas sensor comprises an inlet pressure tap (48), an outlet pressure tap (50), and a travel sensor (52).

8. The storage tank monitoring system of any of claims 1 to 7, further including an alarm unit that is responsive to the control device signal.

9. The storage tank monitoring system of any of claims 1 to 8, wherein the blanket gas sensor is adapted to sense the outflow of the blanket gas into a blanket gas recovery system and responsively generate a second blanket gas sensor signal.

10. The storage tank monitoring system of claim 9, wherein the controller unit is adapted to further receive the second blanket gas signal and responsively generate a leak indicator signal.

11. The storage tank monitoring system of any of claims 1 to 10, further including a tank temperature sensor adapted to sense a tank temperature and generate a tank temperature sensor signal.

12. The storage tank monitoring system of any of claims 1 to 11, wherein the stored media signal is tagged with a unique storage tank specific tag.

13. The storage tank monitoring system of any of claims 1 to 12, wherein the blanket gas signal is tagged with a unique storage tank specific tag.

14. The storage tank monitoring system of any of claims 1 to 13, wherein the blanket gas flow signal is tagged with a unique storage tank specific tag.

15. The storage tank monitoring system of any of claims 1 to 14, wherein the controller unit is disposed in a location remote from the storage tank and is communicatively coupled to the blanket gas flow sensor and one of the stored media sensor and the blanket gas sensor via one of a hardline, a radio device and a transceiver.

16. The storage tank monitoring system of any of claims 1 to 15, wherein the controller unit is communicatively coupled to a central monitoring unit via one of a hardline, a radio device and a transceiver.

17. The storage tank monitoring system of any of claims 1 to 16, wherein the controller unit is communicatively coupled to a global network (124) of computers.

18. The storage tank monitoring system of claim 17, wherein the global network of computers comprises the Internet.

19. The storage tank monitoring system of any of claims 1 to 18, further including a sensor for sensing heat tracing performance.

20. The storage tank monitoring system of any of claims 1 to 19, further including a local communication module for permitting the retrieval of sensor data locally.

21. A method of monitoring and controlling for use in conjunction with a storage tank (30), the method comprising:
providing a blanket gas flow control device (64) adapted to control the flow of a blanket gas (22) into or out of a storage tank (30) that is adapted for storing a fluid media as a stored media (24) wherein the blanket gas flow control device includes a blanket gas flow sensor (44, 46);
sensing a flow of blanket gas into said storage tank;
responsively generating a blanket gas flow sensor signal;
sensing one of a stored media parameter and blanket gas parameter associated with the stored media or the blanket gas within the storage tank, respectively;
responsively generating one of a stored media sensor signal and blanket gas sensor signal;
receiving the blanket gas flow sensor signal and one of the stored media sensor signal and the blanket gas sensor signal as inputs; and
responsively generating a control device signal.

22. The method of claim 21, wherein the control device signal includes one of a first and a second state wherein the first state is indicative of a blanket gas leak and the second state is indicative of no blanket gas leaks.

23. The method of claim 21 or 22, wherein sensing the storage tank media parameter further includes sensing a level of the stored media in the storage tank.

24. The method of any one of claims 21 to 23, wherein sensing the storage tank media parameter further includes sensing an inflow of media into the storage tank and sensing an outflow of media from the storage tank.

25. The method of any one of claims 22 to 24, further including generating an alarm when the gas device signal is placed in a first state.

26. The method of any one of claims 21 to 25, wherein the blanket gas flow sensor signal is a first blanket gas sensor signal, and wherein the blanket gas parameter is an outflow of blanket gas into a blanket gas recovery system.

27. The method of claim 26, further including receiving the second blanket gas sensor signal and responsively generating the device signal.

28. The method of any one of claims 21 to 27, further including sensing a tank temperature and generating a tank temperature sensor signal.

29. The method of any one of claims 21 to 28, further including tagging the stored media sensor signal with a unique storage tank specific tag.

30. The method of any one of claims 21 to 29, further including tagging the blanket gas sensor signal with a unique storage tank specific tag.

31. The method of any one of claims 21 to 30, further including tagging the control device signal with a unique storage tank specific tag.

32. The method of any one of claims 21 to 31, further including communicatively coupling the controller unit to the blanket gas flow sensor and one of the stored media sensor and the blanket gas sensor, via one of a hardline, a radio device and a transceiver.

33. The method of any one of claims 21 to 32, further including communicatively coupling the controller unit to a global network (124) of computers.

34. The method of claim 33, wherein the global network of computers comprises the Internet.

35. The method of any one of claims 21 to 34, further including sensing heat tracing performance.

36. The method of any one of claims 21 to 35, further including communicating the sensor data to a local communication module.

37. The method of any one of claims 21 to 36, further providing a controller unit (36) to receive the blanket gas flow sensor signal and one of the stored media sensor signal and the blanket gas sensor signal, and to generate the control device signal.

## Patentansprüche

1. Überwachungs- und Steuersystem (20) zum Gebrauch in Verbindung mit einem Lagerbehälter, wobei das System folgendes aufweist:
eine Schutzgas-Durchflußsteuereinrichtung (64), die ausgebildet ist, um den Fluß eines Schutzgases (22) zu steuern, wobei die Schutzgas-Durchflußsteuereinrichtung einen Schutzgasdurchflußsensor (44, 46) aufweist, der ausgebildet ist, um den Fluß des Schutzgases in einen oder aus einem Lagerbehälter (30), der dazu ausgebildet ist, ein Fluidmedium als Lagermedium (24) zu speichern, zu erfassen und in Abhängigkeit davon ein Schutzgasflußsignal zu erzeugen;
wenigstens entweder einen Lagermediumsensor (32) oder einen Schutzgassensor (34), die ausgebildet sind, um entweder einen Lagermedium- oder einen Schutzgasparameter, der dem Lagermedium bzw. dem Schutzgas in dem Lagerbehälter zugeordnet ist, entsprechend zu erfassen und in Abhängigkeit davon entweder ein Lagermedium- oder ein Schutzgassensorsignal zu erzeugen; und
eine Steuereinheit (36), die ausgebildet ist, um das Schutzgasflußsignal und entweder das Lagermediumsignal oder das Schutzgassignal zu empfangen und in Abhängigkeit davon ein Steuereinrichtungssignal zu erzeugen.

2. Lagerbehälter-Überwachungssystem nach Anspruch 1, wobei das Steuereinrichtungssignal wenigstens einen von einem ersten und einem zweiten Zustand aufweist, wobei der erste Zustand eine Schutzgasleckage und der zweite Zustand das Nichtvorhandensein von Schutzgasleckagen bezeichnet.

3. Lagerbehälter-Überwachungssystem nach einem der Ansprüche 1 oder 2, wobei der Lagermediumsensor ausgebildet ist, um einen Behälterfüllstand eines gelagerten Mediums in dem Lagerbehälter zu erfassen.

4. Lagerbehälter-Überwachungssystem nach einem der Ansprüche 1 bis 3, wobei der Lagermediumsensor einen Drucksensor aufweist.

5. Lagerbehälter-Überwachungssystem nach einem der Ansprüche 1 bis 4, wobei der Lagermediumsensor ein Schwimmerventil aufweist.

6. Lagerbehälter-Überwachungssystem nach einem der Ansprüche 1 bis 5, wobei der Lagermediumsensor aufweist: einen Zuflußsensor (39), der ausgebildet ist, um einen Zufluß von Medium in den Lagerbehälter zu erfassen, und einen Abflußsensor (40), der ausgebildet ist, um einen Abfluß von Medium aus dem Lagerbehälter zu erfassen.

7. Lagerbehälter-Überwachungssystem nach einem der Ansprüche 1 bis 6, wobei der Schutzgassensor einen Einlaßdruckhahn (48), einen Auslaßdruckhahn (50) und einen Wegaufnehmer (52) aufweist.

8. Lagerbehälter-Überwachungssystem nach einem der Ansprüche 1 bis 7, wobei ferner eine Alarmeinheit vorgesehen ist, die auf das Steuereinrichtungssignal anspricht.

9. Lagerbehälter-Überwachungssystem nach einem der Ansprüche 1 bis 8, wobei der Schutzgassensor ausgebildet ist, um den Abfluß des Schutzgases in ein Schutzgas-Rückgewinnungssystem zu erfassen, und in Abhängigkeit davon ein zweites Schutzgassensorsignal erzeugt.

10. Lagerbehälter-Überwachungssystem nach Anspruch 9, wobei die Steuereinheit ferner ausgebildet ist, um das zweite Schutzgassignal zu empfangen und in Abhängigkeit davon ein Leckageanzeigesignal zu erzeugen.

11. Lagerbehälter-Überwachungssystem nach einem der Ansprüche 1 bis 10, wobei ferner ein Behältertemperatursensor vorgesehen ist, der ausgebildet ist, um eine Behältertemperatur zu erfassen und ein Behältertemperatursensorsignal zu erzeugen.

12. Lagerbehälter-Überwachungssystem nach einem der Ansprüche 1 bis 11, wobei das Lagermediumsignal mit einer für den Lagerbehälter spezifischen eindeutigen Markierung markiert ist.

13. Lagerbehälter-Überwachungssystem nach einem der Ansprüche 1 bis 12, wobei das Schutzgassignal mit einer für den Lagerbehälter spezifischen eindeutigen Markierung markiert ist.

14. Lagerbehälter-Überwachungssystem nach einem der Ansprüche 1 bis 13, wobei das Schutzgasflußsignal mit einer für den Lagerbehälter spezifischen eindeutigen Markierung markiert ist.

15. Lagerbehälter-Überwachungssystem nach einem der Ansprüche 1 bis 14, wobei die Steuereinheit an einem von dem Lagerbehälter fernen Ort angeordnet ist und kommunikativ mit dem Schutzgasdurchflußsensor und einem von dem Lagermediumsensor und dem Schutzgassensor über eine Kabelleitung oder eine Funkeinrichtung oder einen Transceiver verbunden ist.

16. Lagerbehälter-Überwachungssystem nach einem der Ansprüche 1 bis 15, wobei die Steuereinheit kommunikativ mit einer zentralen Überwachungseinheit über eine Kabelleitung oder eine Funkeinrichtung oder einen Transceiver gekoppelt ist.

17. Lagerbehälter-Überwachungssystem nach einem der Ansprüche 1 bis 16, wobei die Steuereinheit kommunikativ mit einem globalen Netz (124) von Rechnern gekoppelt ist.

18. Lagerbehälter-Überwachungssystem nach Anspruch 17, wobei das globale Netz von Rechnern das Internet umfaßt.

19. Lagerbehälter-Überwachungssystem nach einem der Ansprüche 1 bis 18, das ferner einen Sensor zum Erfassen des Wärmeverlaufsverhaltens aufweist.

20. Lagerbehälter-Überwachungssystem nach einem der Ansprüche 1 bis 19, das ferner ein lokales Kommunikationsmodul aufweist, um die lokale Abfrage von Sensordaten zuzulassen.

21. Überwachungs- und Steuerungsverfahren zum Gebrauch in Verbindung mit einem Lagerbehälter (30), wobei das Verfahren die folgenden Schritte aufweist:
Vorsehen einer Schutzgas-Durchflußsteuereinrichtung (64), die ausgebildet ist, um den Fluß eines Schutzgases (22) in einen oder aus einem Lagerbehälter (30), der ein Fluidmedium als Lagermedium (24) speichert, zu steuern, wobei die Schutzgas-Durchflußsteuereinrichtung einen Schutzgasdurchflußsensor (44, 46) aufweist;
Erfassen eines Schutzgasdurchflusses in den Lagerbehälter;
in Abhängigkeit davon Erzeugen eines Schutzgasdurchflußsensorsignals;
Erfassen entweder eines Lagermediumparameters oder eines Schutzgasparameters, die jeweils dem Lagermedium oder dem Schutzgas in dem Lagerbehälter zugeordnet sind;
in Abhängigkeit davon Erzeugen entweder eines Lagermediumsensorsignals oder eines Schutzgassensorsignals;
Empfangen des Schutzgasdurchflußsensorsignals und entweder des Lagermediumsensorsignals oder des Schutzgassensorsignals als Eingangssignale; und
in Abhängigkeit davon Erzeugen eines Steuereinrichtungssignals.

22. Verfahren nach Anspruch 21, wobei das Steuereinrichtungssignal entweder einen ersten oder einen zweiten Zustand aufweist, wobei der erste Zustand eine Schutzgasleckage anzeigt und der zweite Zustand das Nichtvorhandensein von Schutzgasleckagen anzeigt.

23. Verfahren nach Anspruch 21 oder 22, wobei das Erfassen der Lagerbehältermedium-Parameter ferner das Erfassen eines Füllstands des Lagermediums in dem Lagerbehälter aufweist.

24. Verfahren nach einem der Ansprüche 21 bis 23, wobei das Erfassen des Lagerbehältermedium-Parameters ferner aufweist: Erfassen eines Zuflusses von Medium in den Lagerbehälter und Erfassen eines Abflusses von Medium aus dem Lagerbehälter.

25. Verfahren nach einem der Ansprüche 22 bis 24, das ferner aufweist: Erzeugen eines Alarms, wenn das Steuereinrichtungssignal in einen ersten Zustand gebracht ist.

26. Verfahren nach einem der Ansprüche 21 bis 25, wobei das Schutzgas-Durchflußsensorsignal ein erstes Schutzgassensorsignal ist, und wobei der Schutzgasparameter ein Ausfluß von Schutzgas in ein Schutzgas-Rückgewinnungssystem ist.

27. Verfahren nach Anspruch 26, das ferner aufweist: Empfangen des zweiten Schutzgassensorsignals und in Abhängigkeit davon Erzeugen des Einrichtungssignals.

28. Verfahren nach einem der Ansprüche 21 bis 27, das ferner aufweist: Erfassen einer Behältertemperatur und Erzeugen eines Behältertemperatursensorsignals.

29. Verfahren nach einem der Ansprüche 21 bis 28, das ferner aufweist: Markieren des Lagermediumsensorsignals mit einer für den Lagerbehälter spezifischen eindeutigen Markierung.

30. Verfahren nach einem der Ansprüche 21 bis 29, das ferner aufweist: Markieren des Schutzgassensorsignals mit einer für den Lagerbehälter spezifischen eindeutigen Markierung.

31. Verfahren nach einem der Ansprüche 21 bis 30, das ferner aufweist: Markieren des Steuereinrichtungssignals mit einer für den Lagerbehälter spezifischen eindeutigen Markierung.

32. Verfahren nach einem der Ansprüche 21 bis 31, das ferner aufweist: kommunikatives Koppeln der Steuereinheit mit dem Schutzgasdurchflußsensor und entweder dem Lagermediumsensor oder dem Schutzgassensor über eine Kabelleitung oder eine Funkeinrichtung oder einen Transceiver.

33. Verfahren nach einem der Ansprüche 21 bis 32, das ferner aufweist: kommunikatives Koppeln der Steuereinheit mit einem globalen Netz (124) von Rechnern.

34. Verfahren nach Anspruch 33, wobei das globale Netz von Rechnern das Internet umfaßt.

35. Verfahren nach einem der Ansprüche 21 bis 34, das ferner das Erfassen des Wärmeverlaufsverhaltens aufweist.

36. Verfahren nach einem der Ansprüche 21 bis 35, das ferner die Übermittlung der Sensordaten an ein lokales Kommunikationsmodul aufweist.

37. Verfahren nach einem der Ansprüche 21 bis 36, das ferner folgendes aufweist: Vorsehen einer Steuereinheit (36) zu Empfangen des Schutzgasdurchflußsensorsignals und entweder des Lagermediumsensorsignals oder des Schutzgassensorsignals und zum Erzeugen des Steuereinrichtungssignals.

## Revendications

1. Système de surveillance et de gestion (20) destiné à être utilisé conjointement avec une cuve de stockage, comprenant :
un dispositif de gestion de l'écoulement d'un gaz de couverture (64) conçu pour gérer l'écoulement d'un gaz de couverture (22), dans lequel le dispositif de gestion de l'écoulement de gaz de couverture inclut un capteur de l'écoulement de gaz de couverture (44, 46) conçu pour capter l'écoulement du gaz de couverture qui entre dans ou qui sort d'une cuve de stockage (30) qui est conçue pour stocker un milieu fluide tel qu'un milieu stocké (24) et générer en réponse un signal d'écoulement de gaz de couverture ;
au moins l'un d'un capteur de milieu stocké (32) et un capteur de gaz de couverture (34) conçus pour capter l'un d'un milieu stocké et d'un paramètre de gaz de couverture associé avec le milieu stocké ou le gaz de couverture à l'intérieur de la cuve de stockage, respectivement, et générer, en réponse, l'un d'un milieu stocké et d'un signal de capteur de gaz de couverture ; et
une unité de gestion (36) conçue pour recevoir le signal d'écoulement de gaz de couverture et l'un du signal de milieu stocké et du signal de gaz de couverture, et en réponse, générer un signal de dispositif de gestion.

2. Système de surveillance de cuve de stockage selon la revendication 1, dans lequel le signal de dispositif de gestion inclut au moins l'un d'un premier et d'un second états, dans lequel le premier état indique une fuite du gaz de couverture et le second état indique aucune fuite du gaz de couverture.

3. Système de surveillance de cuve de stockage selon l'une quelconque des revendications 1 ou 2, dans lequel le capteur de milieu stocké est conçu pour capter un niveau de cuve d'un milieu stocké dans la cuve de stockage.

4. Système de surveillance de cuve de stockage selon l'une quelconque des revendications 1 à 3, dans lequel le capteur de milieu stocké comprend un capteur de pression.

5. Système de surveillance de cuve de stockage selon l'une quelconque des revendications 1 à 4, dans lequel le capteur de milieu stocké comprend une soupape à flotteur.

6. Système de surveillance de cuve de stockage selon l'une quelconque des revendications 1 à 5, dans lequel le capteur de milieu stocké comprend un capteur d'écoulement entrant (39) conçu pour capter un écoulement entrant d'un milieu dans la cuve de stockage et un capteur d'écoulement sortant (40) conçu pour capter un écoulement sortant d'un milieu de la cuve de stockage.

7. Système de surveillance de cuve de stockage selon l'une quelconque des revendications 1 à 6, dans lequel le capteur du gaz de couverture comprend un robinet de pression d'entrée (48), un robinet de pression de sortie (50) et un capteur de circulation (52).

8. Système de surveillance de cuve de stockage selon l'une quelconque des revendications 1 à 7, incluant en outre une unité d'alarme qui répond au signal du dispositif de gestion.

9. Système de surveillance de cuve de stockage selon l'une quelconque des revendications 1 à 8, dans lequel le capteur de gaz de couverture est conçu pour capter l'écoulement sortant du gaz de couverture dans un système de récupération de gaz de couverture et générer, en réponse, un second signal de capteur de gaz de couverture.

10. Système de surveillance de cuve de stockage selon la revendication 9, dans lequel l'unité de gestion est conçue pour recevoir en outre le second signal de gaz de couverture et générer, en réponse, un signal indicateur d'une fuite.

11. Système de surveillance de cuve de stockage selon l'une quelconque des revendications 1 à 10, incluant, en outre, un capteur de température de cuve conçu pour capter une température de cuve et générer un signal de capteur de température de cuve.

12. Système de surveillance de cuve de stockage selon l'une quelconque des revendications 1 à 11, dans lequel le signal de milieu stocké est étiqueté avec une étiquette unique spécifique de la cuve de stockage.

13. Système de surveillance de cuve de stockage selon l'une quelconque des revendications 1 à 12, dans lequel le signal de gaz de couverture est étiqueté avec une étiquette unique spécifique de la cuve de stockage.

14. Système de surveillance de cuve de stockage selon l'une quelconque des revendications 1 à 13, dans lequel le signal d'écoulement de gaz de couverture est étiqueté avec une étiquette spécifique unique de cuve de stockage.

15. Système de surveillance de cuve de stockage selon l'une quelconque des revendications 1 à 14, dans lequel l'unité de gestion est disposée dans un emplacement éloigné de la cuve de stockage et est couplée par communication au capteur d'écoulement de gaz de couverture et l'un du capteur de milieu stocké et du capteur de gaz de couverture par l'intermédiaire d'une ligne branchée sur le courant du secteur, d'un dispositif radio et d'un émetteur-récepteur.

16. Système de surveillance de cuve de stockage selon l'une quelconque des revendications 1 à 15, dans lequel l'unité de gestion est couplée en communication à une unité de surveillance centrale par l'intermédiaire de l'un d'une ligne branchée sur le courant du secteur, d'un dispositif radio et d'un émetteur-récepteur.

17. Système de surveillance de cuve de stockage selon l'une quelconque des revendications 1 à 16, dans lequel l'unité de gestion est couplée en communication à un réseau global (124) d'ordinateurs.

18. Système de surveillance de cuve de stockage selon la revendication 17, dans lequel le réseau global d'ordinateurs comprend l'Internet.

19. Système de surveillance de cuve de stockage selon l'une quelconque des revendications 1 à 18, incluant en outre un capteur destiné à capter les performances de traçage de la chaleur.

20. Système de surveillance de cuve de stockage selon l'une quelconque des revendications 1 à 19, incluant, en outre, un module de communication locale destiné à permettre la récupération des données de capteur localement.

21. Procédé de surveillance et de gestion destiné à être utilisé conjointement avec une cuve de stockage (30), le procédé comprenant :
la fourniture d'un dispositif de commande d'écoulement de gaz de couverture (64) conçu pour gérer l'écoulement d'un gaz de couverture (22) qui entre dans ou qui sort d'une cuve de stockage (30) qui est conçue pour stocker un milieu fluide en tant que milieu stocké (24) dans lequel le dispositif de gestion d'écoulement du gaz de couverture inclut un capteur d'écoulement de gaz de couverture (44, 46) ;
la détection d'un écoulement de gaz de couverture dans ladite cuve de stockage ;
la génération, en réponse, d'un signal de capteur d'écoulement de gaz de couverture ;
la détection de l'un d'un paramètres de milieu stocké et d'un paramètre de gaz de couverture associé au milieu stocké ou au gaz de couverture à l'intérieur de la cuve de stockage, respectivement ;
générer, en réponse, l'un d'un signal de capteur d'un milieu stocké et d'un signal de capteur de gaz de couverture ;
recevoir le signal de capteur d'écoulement de gaz de couverture et l'un des signal de capteur de milieu stocké et signal de capteur de gaz de couverture comme entrées ; et
générer, en réponse, un signal de dispositif de gestion.

22. Procédé selon la revendication 21, dans lequel le signal de dispositif de gestion inclut l'un d'un premier et d'un second états dans lequel le premier état indique une fuite du gaz de couverture et le second état n'indique aucune fuite de gaz de couverture.

23. Procédé selon la revendication 21 ou 22, dans lequel la détection du paramètre du milieu de la cuve de stockage inclut, en outre, la détection d'un niveau du milieu stocké dans la cuve de stockage.

24. Procédé selon l'une quelconque des revendications 21 à 23, dans lequel la détection du paramètre du milieu de la cuve de stockage inclut, en outre, la détection d'un écoulement entrant d'un milieu dans la cuve de stockage et la détection d'un écoulement sortant d'un milieu de la cuve de stockage.

25. Procédé selon l'une quelconque des revendications 22 à 24, incluant, en outre, la génération d'une alarme, lorsque le signal de dispositif de gaz est placé dans un premier état.

26. Procédé selon l'une quelconque des revendications 21 à 25, dans lequel le signal de capteur d'écoulement de gaz de couverture est un premier signal de capteur de gaz de couverture, et dans lequel le paramètre de gaz de couverture est un écoulement sortant de gaz de couverture dans le système de récupération de gaz de couverture.

27. Procédé selon la revendication 26, incluant en outre la réception du second signal de capteur de gaz de couverture et en réponse la génération du signal de dispositif.

28. Procédé selon l'une quelconque des revendications 21 à 27, incluant en outre la détection d'une température de cuve et la génération d'un signal de capteur de température de cuve.

29. Procédé selon l'une quelconque des revendications 21 à 28, incluant en outre l'étiquetage du signal de capteur de milieu stocké avec une étiquette spécifique de cuve de stockage unique.

30. Procédé selon l'une quelconque des revendications 21 à 29, incluant en outre l'étiquetage du signal de capteur de gaz de couverture avec une étiquette spécifique de cuve de stockage unique.

31. Procédé selon l'une quelconque des revendications 21 à 30, incluant en outre l'étiquetage du signal de dispositif de gestion avec une étiquette spécifique de cuve de stockage unique.

32. Procédé selon l'une quelconque des revendications 21 à 31, incluant en outre le couplage en communication de l'unité de gestion au capteur d'écoulement de gaz de couverture et l'un des capteurs de milieu stocké et de gaz de couverture, par l'intermédiaire de l'un d'une ligne branchée sur le courant du secteur, d'un dispositif radio et d'un émetteur-récepteur.

33. Procédé selon l'une quelconque des revendications 21 à 32, incluant en outre le couplage en communication de l'unité de gestion à un réseau global (124) d'ordinateurs.

34. Procédé selon la revendication 33, dans lequel le réseau global d'ordinateurs comprend l'Internet.

35. Procédé selon l'une quelconque des revendications 21 à 34, incluant en outre la détection des performances de traçage de la chaleur.

36. Procédé selon l'une quelconque des revendications 21 à 35, incluant en outre la communication des données de capteur à un module de communication local.

37. Procédé selon l'une quelconque des revendications 21 à 36, fournissant en outre une unité de gestion (36) destinée à recevoir le signal de capteur d'écoulement de gaz de couverture et l'un du signal de capteur de milieu stocké et du signal de capteur de gaz de couverture, et à générer le signal de dispositif de gestion.
